# EUROPEAN PATENT SPECIFICATION

(11) **EP 0 808 549 B1**
(45) Date of publication and mention of the grant of the patent: **09.02.2005**
(21) Application number: 96902541.0
(22) Date of filing: 30.01.1996
(51) Int. Cl.: H04Q 7/38

(54) **ARRANGEMENT FOR HANDOVER IN A MOBILE TELECOMMUNICATIONS NETWORK**
EINRICHTUNG ZUM WEITERREICHEN IN EINEM MOBILEN TELEKOMMUNIKATIONSNETZWERK
DISPOSITIF DE TRANSFERT DANS UN RESEAU DE TELECOMMUNICATIONS MOBILES

(30) Priority: 06.02.1995 SE 9500408
(43) Date of publication of application: 26.11.1997
(73) Proprietor: TELIA AB, 123 86 Farsta (SE)
(72) Inventor: HJERN, Magnus, S-230 33 Smygehamn (SE); OLANDERS, Peter, S-234 33 Lomma (SE)
(74) Representative: Hopfgarten, Nils
(86) International application number: PCT/SE1996/000099
(87) International publication number: WO 1996/025015

(56) References cited:
- WO-A-93/16549
- US-A- 5 235 632

## Description

### TECHNICAL FIELD

The present invention relates to an arrangement for a telecommunications system which permits automatic handover function between a cordless or cellular radio communications system during an ongoing call.

### PRIOR ART

It is already known, from patent specifications WO 93/16549, US 5 260 988, US 5 127 042 and US 4 989 230, to arrange communications systems which consist of both cordless telephony and cellular mobile telephone systems. The specifications describe systems comprising portable cordless units which can initiate and receive calls in the cordless or the cellular system. The documents describe how calls are connected automatically to the system in which the subscriber is located. The documents thus describe how a user is joined to one or other of the systems. The user moreover has the possibility of selecting one of the systems manually by means of press button procedure.

US patent specification 5 235 632 describes a mobile telephone system which consists of an outdoor system, consisting of base stations with high transmitter power which are divided into cells and are connected to a mobile telephone exchange, and of an indoor system, consisting of base stations with low transmitter power which are connected to a mobile telephone exchange. According to the document, there is a possibility of connecting a call between the inside system and outside system, for example by measuring the signal strength from the respective system.

In addition, the document US 5 309 502 describes a radio telephone which combines the functions of a cordless telephone and a cellular mobile telephone. It is possible, when connecting calls, to select automatically the system via which the communication will take place.

US patent specification 5 210 785 describes a cordless communications system and a terminal which combines two different systems such as cordless telephony and cellular mobile telephony. The choice of the method of communication is made automatically.

US patent specification 5 329 574 describes a method for maintaining continuous telephone communication when a radio communications unit moves between two different communications systems. When the unit discovers that the quality of communication is deteriorating in a first system, a connection packet is sent to a central control unit of a second system. The communication in the first system is maintained until the second system acknowledges acceptance of the communication.

US patent specification 5 212 684 relates to a communications system which uses hand-held radio telephones. The system consists of base stations and portable telephone units in accordance with the GSM standard. The portable telephone stations can also operate in accordance with the DECT standard. The system performs both internal and external handover. Handover between DECT and GSM is not described, however.

Digital European Cordless Telecommunications, DECT, is a system which has been specified within the ETSI for cordless communication in a number of application areas, for public applications, for private use within, for example, business systems, or for domestic use, and for radio access in the local network. Although DECT has great similarities to the traditional mobile telephone systems, the basic standard does not have descriptions for the functionality of the network. For this purpose, special access profiles are specified instead, which access profiles describe the connection to, and the interaction with, the background network elements.

Work is in progress on a profile of this kind for cooperation with GSM, the DECT/GSM Interworking Profile. The standards in this profile describe how functions and messages in GSM will be able to be transmitted via a DECT radio system, together with requests for services, how the functional connection to the GSM exchange, the MSC, will take place, and how type-testing of equipment will be carried out. First, it will be possible for voice services to be offered by means of direct connection to the GSM network, but in the standard there is also provision for being able to use DECT for other purposes, for example message services, additional services and data transmission. The invention which is described in this application may come to be included in some of these standards.

DECT is an extremely flexible standard which combines high system capacity, within traffic-intensive areas, and good quality in terms of both voice services and data services. The limited radio coverage of the system means, however, that DECT systems are very local, and DECT can scarcely be extended to cover such large areas as are covered by a mobile telephone network. A combined system, in which DECT utilizes the mobility functions and very extensive radio coverage of GSM, may in this way come to represent a both powerful and flexible access solution in a number of application areas. At the same time as users gain access to the services and functions of the GSM network, the infrastructure of the network can be utilized more efficiently, and operators have access to new markets.

The fixed side of DECT can be divided into Radio Fixed Parts, RFPs, and a central unit, Central Fixed Part, CFP. Together they form a Fixed Part, FP. RFPs connected to a common central unit constitute a so-called cluster and serve all portables, PP, within a coverage area. The CFP can, for example, be an integrated part in a PABX, or can constitute part of the local exchange, LX. This DECT system is owned or administered either by a public telephone operator or by a private operator.

In more advanced application areas, the CFP of the system can also include local data bases, the Home Data Base, HDB, and the Visitors Data Base, VDB, but their intelligence can also be implemented directly in the CFP or, as in the case of GSM, can be supported by functions in the background network.

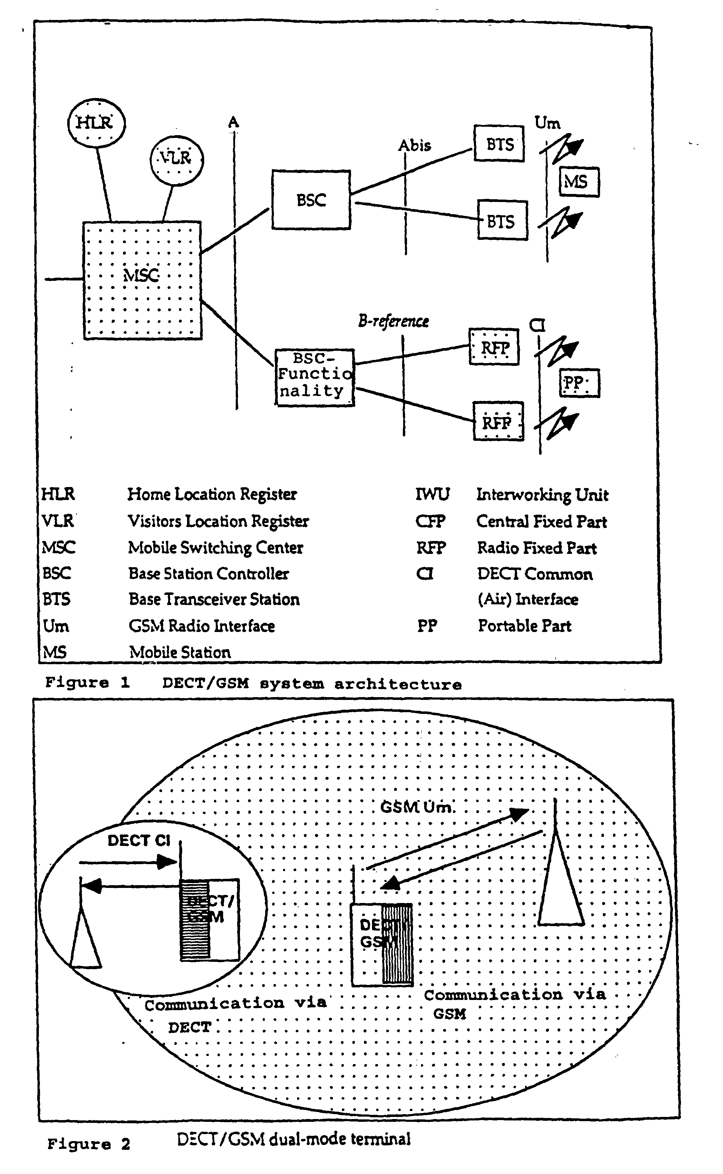

A DECT system connected to the GSM network replaces, in this architecture, the base station and radio systems in GSM. The special InterWorking Unit, IWU, can consist of a distinct unit or can be a part of the DECT FP. This emulates the functionality of the GSM BSC and is thus responsible for ensuring that the functionality and the messages specified via GSM's A interface (Figure 1) are transmitted to the terminal.

A DECT terminal, or portable, needs to be able to handle GSM's identity structure in order to be connected-in to the combined DECT/GSM environment. There are also requirements as regards security routines, for example authentication and encryption of user data.

There is reason to suppose that the user, as long as it is a matter of the same type of communication, will see considerable value in having to use only one terminal for this communication. Combined handsets for DECT and GSM, so-called dual mode terminals (Figure 2), are therefore an important component in the integration of the systems. In the present climate it is considered very probable that combined sets for DECT/GSM will be on the market within a period of 3 years.

With a combined DECT/GSM terminal, there will of course also be a requirement for it to be possible to maintain the communication at a change-over between the different access systems. However, transferring an ongoing call from DECT to GSM, i.e. handover, is not as yet described in any of the standards relating to interaction between the systems.

### DESCRIPTION OF THE INVENTION

### Technical problem

In mobile telecommunications, the mobile is linked to a specific system, for example GSM, DECT, etc. The GSM system is used for communication over large geographical areas, for example a country, countries, or other large geographical divisions. In addition, radio systems of the DECT type exist which are intended to be used within limited areas. The latter systems are as a rule covered by the more overlapping systems of the GSM type. Users employing the DECT systems wanted to employ the GSM system in some situations. For this purpose, mobiles have been developed which have the possibility of being connected to both the GSM and DECT systems. The said mobiles in this case contain the necessary technology for communication via the respective system. A mobile which is on the move and is being conveyed out from the DECT system comes gradually to lose contact with the said system, in which case there is a requirement for the call to be transferred to the GSM system. In the systems which have been known hitherto, this transfer, or handover, has been effected by manual control from the mobile. In order to achieve a continuous communication, there is therefore a requirement that the transfer, or handover, from the DECT system to the GSM system will take place automatically. The necessary connections will be established for this, and the link-up takes place without the user having to take any special measures.

Automatic switch-over of calls, or handover, is a very important function in order to be able to offer users complete mobility over several application areas, irrespective of whether DECT or GSM access is used for the GSM service. Its use is particularly important given the new operator structures which will inevitably be developed with DECT technology, since this permits a transfer between private and public networks, a functionality which is at present lacking in GSM.

The handover functionality between the DECT and GSM systems therefore represents, for the operator, a significant competitive advantage over other players on the market. It is therefore of immediate interest to find a solution for handover form DECT to GSM in which both systems are operated by the same operator, a function for DECT-GSM intra-operator handover. The fact that this type of handover (DECT → GSM) is the one which should be dealt with first is based on the fact that the coverage of the GSM system is general (covers large areas). This means that it will be possible to effect a handover from a DECT system to a GSM system under most circumstances.

Technical problems in the present application are:
- A DECT radio system, connected to the background GSM network, can utilize the mobility functionality of the network to make switch-over between the systems possible. However, it is necessary that information can be transferred between the terminal and the network, that is between the DECT FP and the GSM MSC, in accordance with the requirements which are defined in DECT/GSM IWP.
- Since the communication with the different radio systems in DECT and GSM takes place independently, an automatic switch-over presupposes that a DECT/GSM dual-mode terminal is being utilized by the user.
- A GSM handover presupposes that the mobile station is assisting the network with measurement data concerning the radio environment. The radio parts (OSI layers 1 - 2) in a dual-mode terminal are not, however, assumed to be active at the same time in the terminal for the DECT and GSM systems. Handover in DECT has a completely different functionality from that in GSM. The traditional handover methods which exist in DECT or GSM cannot therefore be used without modification for a switch-over between the systems.
- Handover should not be a slow procedure. From DECT to GSM, it may be acceptable for the handover to be perceptible, but the time requirements are still high. The radio conditions in the microcell or picocell environment mean that the switch-over has to be prepared for in advance in the fixed system parts.
- For reasons of time, necessary signalling should be kept to a minimum.
- In order to maintain a high quality of connection, unnecessary handover must be avoided, i.e. switch-over to a GSM cell takes place only when DECT coverage is lacking.
- It should be possible for the switch-over to take place fully automatically, without the user having to take any measures, or by a new call connection (three-way call) being established.
- Additional requirements are that it should be possible to implement the solution for handover at reasonably low costs, and without the need for extensive modifications to software in already existing terminals.

The object of the present invention is to solve the problems mentioned.

### SOLUTION

The present invention relates to an arrangement for handover in a mobile telecommunications network. A mobile unit is arranged to communicate via a first and/or second mobile telecommunications network. The first mobile telecommunications network is arranged to serve a geographically limited area, and the second mobile telecommunications network is arranged to serve a larger geographical area, which geographical area can be a country, countries, etc. The larger geographical area at least partially covers the smaller geographical area. The mobile unit is arranged with functionalities for the respective mobile telecommunications network. This means that the mobile unit can be used in both the first and the second telecommunications network. During the call, the mobile unit detects the quality of the communication upon communication via the first mobile telecommunications network. The quality of the communication is determined by the mobile unit which decides when the quality falls below or comes near to a minimum acceptable level. When the quality of the communication falls below or comes near to the minimum acceptable level, the mobile unit transfers the communication to the second mobile telecommunications network. The transition, or handover, from the first telecommunications network to the second telecommunications network is arranged to take place automatically.

In a further development of the invention, the first and second telecommunications networks are arranged to communicate with each other. The first and second communications networks are arranged to communicate with each other via a cordless telephone network. The first mobile telecommunications network moreover consists of a cordless telecommunications network and is arranged to serve a number of first base stations within the geographical area. The second mobile telecommunications network is arranged to be served by a number of second base stations within the larger geographical area. The first telecommunications network is preferably a DECT system and the second mobile telecommunications network is preferably a GSM system. A handover zone is moreover arranged at the outer edge of the first mobile telecommunications network.

### DESCRIPTION OF THE FIGURES

Figure 1 shows the system architecture for a system according to the invention.
Figure 2 shows an example where GSM and DECT communication is taking place, and the actual coverage area.
Figure 3 shows a GSM cell, and a DECT cluster in which the handover zone is marked.
Figure 4 shows the DECT to GSM handover situation.

### DETAILED EMBODIMENT

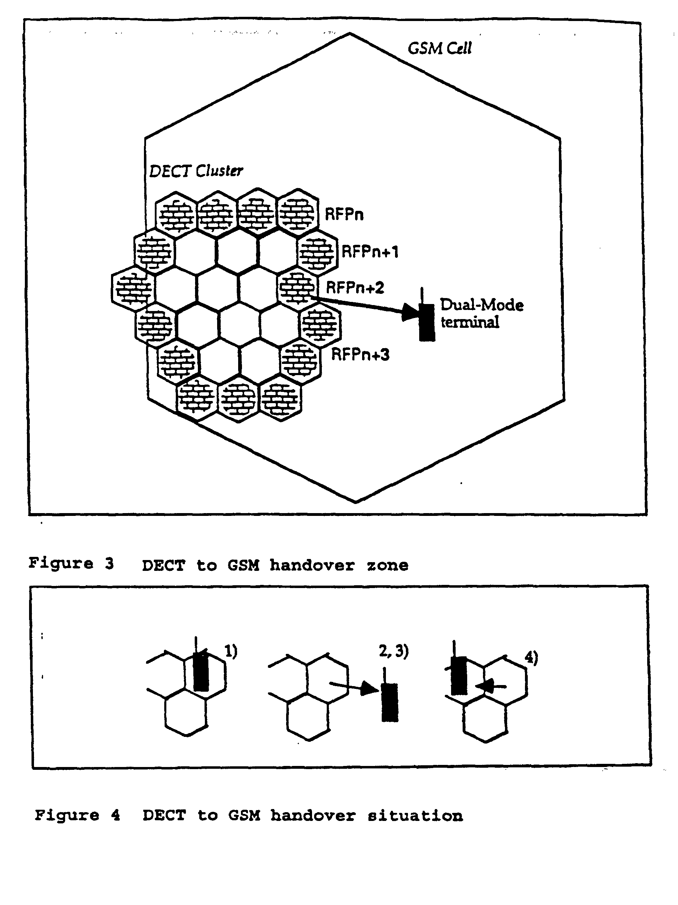

The solution builds on the following basic particulars:
1) DECT RFPs which cover the edge of the system belong to the zone of handover to GSM and can be identified in particular by the CTP/IWU (Figure 3). This edge area is also covered by traditional GSM radio access via one or more BTS, and it is this factor which makes a switch-over between the systems possible.
2) When the terminal is located in the handover zone during an ongoing call, an external handover to GSM can be initiated as follows:
   2.1) The terminal activates handover when the field strength on the DECT connection has become so low that a call can no longer be maintained with sufficient quality. The possibility also exists of initiating handover, from the operator, for other reasons, for example type of subscription, geographical position, etc.
   2.2) The CFP/IWU utilizes its BSC functionality and requests of the GSM MSC that a handover between two base station systems be effected.
3) Following acknowledgement from the network and a handover command, the contact of the terminal with the DECT system is broken, and the terminal changes instead to GSM mode. Contact is established with the "new" base station, BTS, and the handover is completed to GSM MSC.
4) Handover can be broken off if, for example, the terminal leaves the particular handover zone.

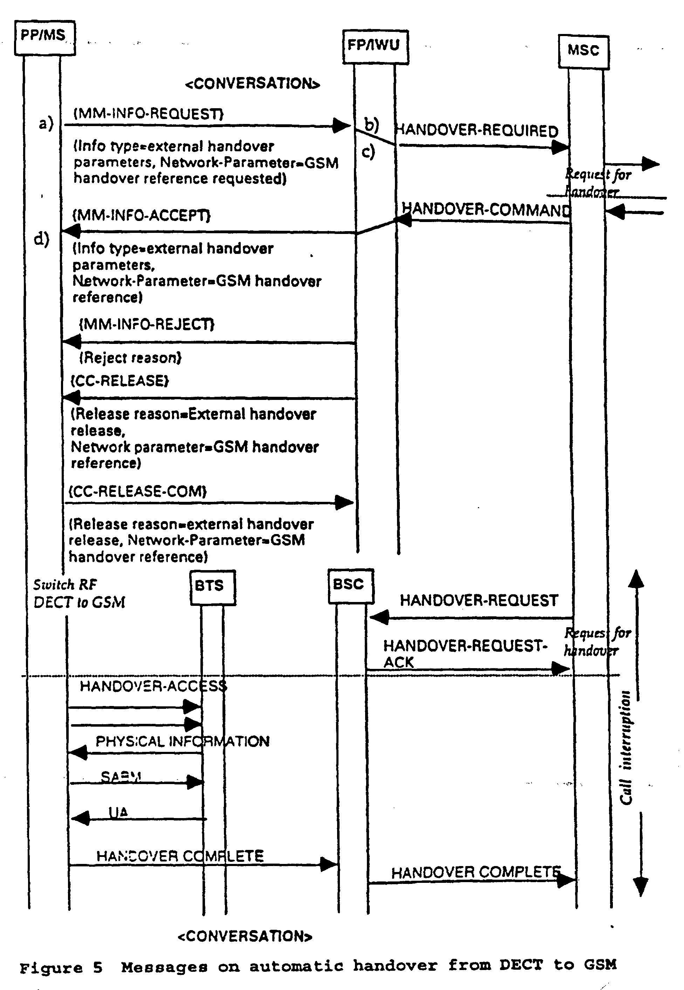

The present application is based on novel and unique combinations of known techniques being combined with novel elements. Some of the most important particulars of the invention are summarized below. See also the notes in Figure 5.
a) In contrast to GSM, it is the terminal itself which initiates handover from the viewpoint of the DECT system. It is therefore this terminal which starts the whole switch-over procedure. For the dual mode terminal to be able to carry out handover, it is necessary for common DECT/GSM functions to be built into the terminal. This can be, for example, subscriber information, functions for registering in different systems and networks, and rerouting of conventional functions upon handover between the systems. A specific requirement of the dual mode terminal is that it will be able to request information for handover to GSM when the DECT coverage is inadequate.
b) The CFP/IWU is the unit which, from the viewpoint of the GSM network, is responsible for initiating handover. The CFP/IWU will be able to interpret a request for handover from the terminal and translate it to a GSM-specific message, which is transmitted to the GSM MSC.
c) In the invention, the IWU is pre-programmed with the necessary data for the GSM cell in which the local DECT system is located. It will be possible for this data to be used in the request for handover to the MSC for the BTS/BSC combination in question and thereby designate the relevant GSM cell of the DECT system.
d) The CFP/IWU will be able to receive the switch-over order in the network and transmit this to the terminal. The information concerning the frequency and identity of the new GSM cell is given to the terminal in the message of acknowledgement to its original handover request.

One of the most outstanding features of DECT is the possibility of using several different identities simultaneously in one and the same terminal, and of indicating, from the FP, which type of access rights goes with these identities. For a DECT user directly coupled to an background GSM network, a combination of PARK and IPUI is defined which makes the DECt subscription valid in GSM too. IPUI_{R} is identical to the identity IMSI defined in GSM, while PARK_{{D}} points to GSM access rights. For reasons of radio efficiency, there is a shortened identity which is valid only within the search area, or location area, in which the terminal is located. This Temporary Portable User Identity, TPUI, is used for calls or paging to a specific terminal and is directly equivalent to the GSM TMSI.

A DECT/GSM dual-mode terminal has the possibility of storing several sets of identities and system parameters independently of each other. This means that the terminal can use simultaneous subscriptions in, for example, a private company network and in relation to an background GSM network. Handover in DECT is normally initiated by the terminal, so-called mobile originated handover, either because the radio channel is subject to interference or for reasons of coverage. Such internal handover within a DECT FP is managed fully within the framework of the local DECT system and requires no interaction with background network elements. Switch-over to another CFP or to GSM is called external handover and can be decided either by the terminal or the CFP/IWU. In this invention, we start from the premise that it is the terminal which, in DECT mode, has the best knowledge of the radio-related conditions and therefore initiates the switch-over, which is also the most common and the intended form in DECT.

A terminal which, during an ongoing call, communicates via RFPₙ-RFPₙ₊₃ (Figure 3) is located within the particular area which is identified as the handover zone (marked by [lacuna] in the figure). When the field strength from the RFP has dropped so low that the call quality may be affected, the terminal proposes that an external handover should be carried out (Figure 5). The terminal here uses its GSM subscription, which includes necessary identity, encryption key and authentication key.

A handover in GSM is decided by the control function of the base station system, BSC, on the basis of, among other things, measurement data from the mobile concerning the signal levels of the surrounding base stations, BTS. In the local DECT system, the CFP/IWU is therefore the unit which, from the viewpoint of the GSM network, is responsible for initiating the switch-over and emulates so-called mobile assisted handover. A switch-over to GSM further involves the connection being taken over by another base station system. This inter-BSC - intra-MSC handover requires that the GSM MSC participates in the switch-over.

Since the terminal in DECT usually initiates handover itself, the CFP/IWU needs to be able to interpret such a request and convey it onwards to the MSC. The terminal requests of the CFP that a handover to GSM be carried out, {MM-INFO-REQUEST}, and asks for the necessary parameters from the network. In the invention the IWU is pre-programmed with the necessary data for the cell in which the local DECT system is located. In the request for handover, HANDOVER-REQUIRED, this data is included as part of the information which is transmitted to the MSC.

The MSC conveys the handover procedure onwards to the designated base station system in GSM, HANDOVER-REQUEST, and can, upon a successful acknowledgement from the said system, HANDOVER-REQUEST-ACK, give the terminal a command that switch-over be carried out, HANDOVER-COMMAND.

The CFP/IWU transmits this command to the terminal in the message of acknowledgement to its original request for handover, {MM-INFO-ACCEPT}. In this message the terminal obtains information indicating to which base station, and at which frequency, it is to establish contact via GSM radio access.

A rejected attempt at switch-over is acknowledged with {MM-INFO-REJECT}, see hereinbelow.

In the case of a successful switch-over attempt, the CFP now terminates the DECT connection with the terminal, {CC-RELEASE}, {CC-RELEASE-COM}, in order that the two parties will be able to effect a switch-over to the new GSM link. Until this link has been established, there is a temporary interruption in the ongoing call.

Handover can take place synchronously or asynchronously in GSM. Synchronous handover reduces the interruption time (from about 200 msec to about 100 msec), but it requires that mobile stations have the possibility, in conjunction with the transmission of measurement data, of providing the network with synchronization information on the base stations involved (pseudo timing advance). In the technical solution, use is made of asynchronous handover in which the terminal synchronizes itself with respect to the new base station in conjunction with the connection of the new GSM link. It is possible for synchronous handover also to be used within the scope of the invention, which would make it possible to reduce the interruption time. However, this probably imposes greater technical demands on the equipment, with modifications to the fixed system units in DECT.

Immediately after disconnection of the DECT link, the GSM part in the terminal is activated, and the communication with GSM is established. This is achieved by means of the terminal sending the message HANDOVER-ACCESS, at the designated carrier frequency, until the base station responds with PHYSICAL-INFORMATION in order to give the terminal the necessary information concerning the new link. After a synchronized, clear and encrypted connection has once again been established between the two parties, the terminal finishes the switch-over by sending HANDOVER-COMPLETE, which is conveyed onwards via the base station system to the MSC. The call is connected through, and the conversation can continue. The MSC is also responsible for terminating the former connect path through the DECT system.

A prepared handover can be interrupted for a number of reasons. For example, the terminal may, via internal handover, have changed base station within the DECT system to an RFP lying "deeper" in the DECT cluster than the defined handover zone. The call can continue to be served with DECT access, without further measures needing to be taken.

Handover can also be interrupted for operator reasons, because the terminal is not provided with the necessary GSM parameters, or because a negative acknowledgement is obtained from the GSM MSC (see Figure 5). In this case, the terminal should not interrupt the ongoing call, but should instead maintain the connection via DECT for as long as this is possible.

The present invention is not limited to what has been shown above by way of example, but can instead be modified in respect of the inventive concept and the attached patent claims.

## Claims

1. Arrangement for handover in a mobile telecommunications network, in which a mobile unit is arranged to communicate via a first and/or second mobile telecommunications network, the first mobile telecommunications network being arranged to serve a geographically limited area, and the second mobile telecommunications network being arranged to serve a larger geographical area, with the larger geographical area at least partially covering the smaller geographical area, and the mobile unit being arranged with functionalities for the respective mobile telecommunications network, in that the mobile unit is arranged to detect the quality of an ongoing communication upon communication via the first mobile telecommunications network, in that the mobile unit is arranged to determine when the quality of the communication falls below or comes near to a minimum acceptable level, in that the mobile unit is arranged to transfer the communication to the second mobile telecommunications network when the quality of the communication falls below or comes near to the minimum acceptable level, and in that the transition, or handover, from the first mobile telecommunications network to the second telecommunications network can be carried out, **characterized in that**, a message of acknowledgement is arranged to be transmitted to the mobile unit, and **in that** the mobile unit is arranged to obtain information indicating which base station and which frequencies to be used from a Central Fixed Part/Inter-working Unit, CFP/IWU.

2. Arrangement according to Claim 1, **characterized in that** the transition from the first mobile telecommunications network to the second mobile telecommunications network takes place automatically.

3. Arrangement according to either of the preceding patent claims, **characterized in that** the first and second telecommunications networks are arranged to communicate with each other.

4. Arrangement according to Claim 3, **characterized in that** the first and second communications networks are arranged to communicate directly with each other and/or via a cordless telephone network.

5. Arrangement according to any one of the preceding claims, **characterized in that** the first mobile telecommunications network consists of a cordless telecommunications network.

6. Arrangement according to Claim 5, **characterized in that** the first mobile telecommunications network is arranged to be served by a number of first base stations within the geographically limited area.

7. Arrangement according to Claims 1 to 3, **characterized in that** the second mobile telecommunications network is arranged to be served by a number of second base stations within the larger geographical area.

8. Arrangement according to any one of the preceding claims, **characterized in that** the first telecommunications network is preferably a DECT system and the second mobile telecommunications network is preferably a GSM system.

9. Arrangement according to any one of the preceding claims, **characterized in that** a handover zone is arranged at the outer edge of the first mobile telecommunications network.

10. Arrangement according to any one of the preceding claims, **characterized in that** the first and the second mobile telecommunications networks, respectively, are arranged to be operated by a common operator.

11. Method for handover in a mobile telecommunications network, in which a mobile unit communicates with a first and/or second mobile telecommunications network, and the first mobile telecommunications network serves a geographically limited area, and the second mobile telecommunications network serves a larger geographical area, which completely or partially covers the geographically limited area, and the mobile unit is given functions for communication with the first or second mobile telecommunications network, respectively, in that the mobile unit detects the quality of an ongoing communication via the first mobile telecommunications network, in that the mobile unit determines when the quality falls below/comes near to a minimum acceptable level, when the communication is transferred from the first to the second mobile telecommunications network, **characterized in that** a message of acknowledgement is transmitted to the mobile unit, and **in that** the mobile unit obtains information indicating which base station and which frequencies to be used.

12. Method according to Claim 11, **characterized in that** the mobile unit initiates connection to the second mobile telecommunications network, and disconnection of the first mobile telecommunications network.

13. Method according to Claim 12, **characterized in that** the disconnection with respect to the first telecommunications network is effected when the connection to the second mobile telecommunications network has been effected.

## Patentansprüche

1. Einrichtung zur Übergabe (Handover) in einem mobilen Telekommunikationsnetz, in welchem eine mobile Einheit dazu eingerichtet ist, über ein erstes und/oder ein zweites mobiles Telekommunikationsnetz zu kommunizieren, wobei das erste mobile Telekommunikationsnetz dazu eingerichtet ist, ein geographisch begrenztes Gebiet zu bedienen, und das zweite mobile Telekommunikationsnetz dazu eingerichtet ist, ein grösseres geographisches Gebiet zu bedienen, wobei das grössere geographische Gebiet zumindest teilweise das kleinere geographische Gebiet überdeckt und die mobile Einheit mit Funktionalitäten für das betreffende mobile Telekommunikationsnetz ausgestattet ist, wobei die mobile Einheit dazu eingerichtet ist, die Qualität eines laufenden Kommunikationsvorgangs bei Kommunikation über das erste mobile Telekommunikationsnetz ermittelt, dass die mobile Einheit dazu eingerichtet ist zu ermitteln, wann die Qualität der Kommunikation unter einen annehmbaren Mindestwert abfällt bzw. diesem nahe kommt, wobei die mobile Einheit dazu eingerichtet ist, die Kommunikation an das zweite mobile Telekommunikationsnetz weiterzugeben, wenn die Qualität der Kommunikation unter den annehmbaren Mindestwert abfällt bzw. diesem nahe kommt, und dadurch dass der Übergang oder die Übergabe vom ersten mobilen Telekommunikationsnetz an das zweite mobile Telekommunikationsnetz ausgeführt werden kann, **dadurch gekennzeichnet, dass** die Übermittlung einer Bestätigungsnachricht an die mobile Einheit vorgesehen ist, und dass die mobile Einheit dazu eingerichtet ist, Information zu erhalten, die anzeigt, welche Basisstation und welche Frequenzen von einem zentralen festen Teil/Interworking-Einheit CFP/IWU zu benutzen sind.

2. Einrichtung gemäss Anspruch 1, **dadurch gekennzeichnet, dass** der Übergang vom ersten mobilen Telekommunikationsnetz an das zweite mobile Telekommunikationsnetz automatisch erfolgt.

3. Einrichtung gemäss einem der beiden vorhergehenden Ansprüche, **dadurch gekennzeichnet, dass** das erste und zweite Telekommunikationsnetz dazu eingerichtet sind, miteinander zu kommunizieren.

4. Einrichtung gemäss Anspruch 3, **dadurch gekennzeichnet, dass** das erste und zweite Telekommunikationsnetz dazu eingerichtet sind, direkt und/oder über ein schnurloses Telefonnetz miteinander zu kommunizieren.

5. Einrichtung gemäss einem der vorhergehenden Ansprüche, **dadurch gekennzeichnet, dass** das erste mobile Telekommunikationsnetz aus einem schnurlosen Telekommunikationsnetz besteht.

6. Einrichtung gemäss Anspruch 5, **dadurch gekennzeichnet, dass** das erste mobile Telekommunikationsnetz dazu eingerichtet ist, von einer Anzahl von ersten Basisstationen innerhalb des geographisch begrenzten Gebiets bedient zu werden.

7. Einrichtung gemäss Anspruch 1 bis 3, **dadurch gekennzeichnet, dass** das zweite mobile Telekommunikationsnetz dazu eingerichtet ist, von einer Anzahl von zweiten Basisstationen innerhalb des größeren geographischen Gebiets bedient zu werden.

8. Einrichtung gemäss einem der vorhergehenden Ansprüche, **dadurch gekennzeichnet, dass** das erste mobile Telekommunikationsnetz vorzugsweise ein DECT-System ist und das zweite mobile Telekommunikationsnetz vorzugsweise ein GSM-System ist.

9. Einrichtung gemäss einem der vorhergehenden Ansprüche, **dadurch gekennzeichnet, dass** eine Übergabezone am äusseren Rand des ersten mobilen Telekommunikationsnetzes eingerichtet ist.

10. Einrichtung gemäss einem der vorhergehenden Ansprüche, **dadurch gekennzeichnet, dass** das erste und zweite mobile Telekommunikationsnetz jeweils dazu eingerichtet sind, von einem gemeinsamen Betreiber betrieben zu werden.

11. Verfahren zur Übergabe in einem mobilen Telekommunikationsnetz, in dem eine mobile Einheit mit einem ersten und/oder zweiten mobilen Telekommunikationsnetz kommuniziert, und das erste mobile Telekommunikationsnetz ein geographisch begrenztes Gebiet versorgt, und das zweite mobile Telekommunikationsnetz ein grösseres geographisches Gebiet versorgt, welches das geographisch begrenzte Gebiet vollständig oder teilweise überdeckt, und in dem der mobilen Einheit jeweils Funktionen zur Kommunikation mit dem ersten oder zweiten mobilen Telekommunikationsnetz gegeben werden, dass die mobile Einheit die Qualität eines laufenden Kommunikationsvorgangs über das erste mobile Telekommunikationsnetz ermittelt, dass die mobile Einheit ermittelt, wenn die Qualität bei der Übergabe der Kommunikation vom ersten mobilen Telekommunikationsnetz an das zweite mobile Telekommunikationsnetz unter einen bestimmten annehmbaren Mindestwert abfällt bzw. diesem nahe kommt, **dadurch gekennzeichnet, dass** eine Bestätigungsnachricht an die mobile Einheit übermittelt wird, und dass die mobile Einheit Information erhält, die anzeigt, welche Basisstation und Frequenzen zu benutzen sind.

12. Verfahren gemäss Anspruch 11, **dadurch gekennzeichnet, dass** die mobile Einheit eine Verbindung zum zweiten mobilen Telekommunikationsnetz herstellt und die Abkopplung des ersten mobilen Telekommunikationsnetzes bewirkt.

13. Verfahren gemäss Anspruch 12, **dadurch gekennzeichnet, dass** die Abkopplung vom ersten mobilen Telekommunikationsnetz bewirkt wird, wenn die Verbindung zum zweiten mobilen Telekommunikationsnetz hergestellt ist.

## Revendications

1. Dispositif de transfert dans un réseau de télécommunications mobiles, dans lequel une unité mobile est adaptée pour communiquer par l'intermédiaire d'un premier et/ou d'un second réseau de télécommunications mobiles, le premier réseau de télécommunications mobiles étant adapté pour desservir une zone limitée géographiquement, et le second réseau de télécommunications mobiles étant adapté pour desservir une zone géographique plus grande, la zone géographique plus grande couvrant au moins partiellement la zone géographique plus petite, et l'unité mobile étant pourvue de fonctionnalités adaptées au réseau de télécommunications mobiles respectif, dans lequel l'unité mobile est adaptée pour détecter la qualité d'une communication en cours lors d'une communication passant par le premier réseau de télécommunications mobiles, dans lequel l'unité mobile est adaptée pour déterminer à quel moment la qualité de la communication tombe en dessous, ou se rapproche, d'un niveau minimum acceptable, dans lequel l'unité mobile est adaptée pour transférer la communication au second réseau de télécommunications mobiles quand la qualité de la communication tombe en dessous, ou se rapproche, du niveau minimum acceptable, et dans lequel la transition, ou transfert, du premier réseau de télécommunications mobiles au second réseau de télécommunications peut être réalisée, **caractérisé en ce qu'**un message d'acquittement est structuré de manière à être transmis à l'unité mobile et **en ce que** l'unité mobile est adaptée pour obtenir des informations indiquant quelle station de base et quelles fréquences doivent être utilisées à partir d'un poste fixe central/unité d'interfonctionnement (CFP/IWU).

2. Dispositif selon la revendication 1, **caractérisé en ce que** la transition du premier réseau de télécommunications mobiles au second réseau de télécommunications mobiles s'effectue automatiquement.

3. Dispositif selon l'une ou l'autre des précédentes revendications, **caractérisé en ce que** les premier et second réseaux de télécommunications sont adaptés pour communiquer l'un avec l'autre.

4. Dispositif selon la revendication 3, **caractérisé en ce que** les premier et second réseaux de communications sont adaptés pour communiquer directement l'un avec l'autre et/ou par l'intermédiaire d'un réseau de téléphonie sans fil.

5. Dispositif selon l'une quelconque des précédentes revendications, **caractérisé en ce que** le premier réseau de télécommunications mobiles se compose d'un réseau de télécommunications sans fil.

6. Dispositif selon la revendication 5, **caractérisé en ce que** le premier réseau de télécommunications mobiles est adapté pour être desservi par un certain nombre de premières stations de base à l'intérieur de la zone limitée géographiquement.

7. Dispositif selon les revendications 1 à 3, **caractérisé en ce que** le second réseau de télécommunications mobiles est adapté pour être desservi par un certain nombre de secondes stations de base à l'intérieur de la zone géographique plus grande.

8. Dispositif selon l'une quelconque des précédentes revendications, **caractérisé en ce que** le premier réseau de télécommunications est de préférence un système DECT et le second réseau de télécommunications mobiles est de préférence un système GSM.

9. Dispositif selon l'une quelconque des précédentes revendications, **caractérisé en ce qu'**une zone de transfert est située à la périphérie extérieure du premier réseau de télécommunications mobiles.

10. Dispositif selon l'une quelconque des précédentes revendications, **caractérisé en ce que** le premier et le second réseau de télécommunications mobiles, respectivement, sont adaptés pour être activés par un opérateur commun.

11. Procédé de transfert dans un réseau de télécommunications mobiles, dans lequel une unité mobile communique avec un premier et/ou un second réseau de télécommunications mobiles, le premier réseau de télécommunications mobiles dessert une zone géographiquement limitée et le second réseau de télécommunications mobiles dessert une zone géographique plus grande, qui couvre partiellement ou totalement la zone géographiquement limitée, et l'unité mobile est dotée de fonctions permettant une communication avec le premier ou le second réseau de télécommunications mobiles, respectivement, dans lequel l'unité mobile détecte la qualité d'une communication en cours passant par le premier réseau de télécommunications mobiles, dans lequel l'unité mobile détermine à quel moment la qualité tombe en dessous ou se rapproche d'un niveau minimum acceptable et à quel moment la communication est transférée du premier au second réseau de télécommunications mobiles, **caractérisé en ce qu'**un message d'acquittement est transmis à l'unité mobile et **en ce que** l'unité mobile obtient des informations indiquant quelle station de base et quelles fréquences doivent être utilisées.

12. Procédé selon la revendication 11, **caractérisé en ce que** l'unité mobile établit une connexion vers le second réseau de télécommunications mobiles et effectue une déconnexion du premier réseau de télécommunications mobiles.

13. Procédé selon la revendication 12, **caractérisé en ce que** la déconnexion par rapport au premier réseau de télécommunications est effectuée une fois que la connexion au second réseau de télécommunications mobiles a été établie.
